# EUROPEAN PATENT SPECIFICATION

(11) **EP 2 627 948 B1**
(45) Date of publication and mention of the grant of the patent: **18.03.2015**
(21) Application number: 11776903.4
(22) Date of filing: 13.10.2011
(51) Int. Cl.: F24J 2/34, F22B 1/04, F22B 1/00, F22B 31/00

(54) **DEVICE, PLANT AND METHOD WITH HIGH LEVEL OF ENERGY EFFICIENCY FOR STORING AND USE OF THERMAL ENERGY OF SOLAR ORIGIN**
VORRICHTUNG, ANLAGE UND VERFAHREN ZUR SPEICHERUNG UND VERWENDUNG VON SOLAR-THERMISCHE ENERGIE MIT HOHEM ENERGIEEFFIZIENZ
APPAREIL, CENTRALE ET PROCÉDÉ POUR LE STOKAGE ET L'UTILISATION D'ÉNERGIE THERMIQUE D'ORIGINE SOLAIRE, CECI AVEC UN HAUT DEGRÉ D'ÉFFICACITÉ ÉNERGÉTIQUE

(30) Priority: 15.10.2010 IT RM20100550
(43) Date of publication of application: 21.08.2013
(73) Proprietor: Magaldi Industrie S.r.l., 84135 Salerno (IT)
(72) Inventor: MAGALDI, Mario, I-84134 Salerno SA (IT); DE MICHELE, Gennaro, I-56125 Pisa PI (IT); SORRENTI, Rocco, 84135 Salerno SA (IT); DONATINI, Franco, Pisa PI 56122 (IT)
(74) Representative: Papa, Elisabetta
(86) International application number: PCT/IB2011/054540
(87) International publication number: WO 2012/049655

(56) References cited:
- WO-A2-2009/147651
- US-A1- 2003 015 150

## Description

### Field of the invention

The present invention relates to an industrial plant based on the use and storage of solar energy, to a device for storing and releasing solar thermal energy suitable for use within said plant and to a related method.

### Background of the invention

It is known the use of solar energy concentrated through heliostats, fixed or by tracking. It also known the possibility of storing not used heat in solid materials with high thermal conductivity (typically graphite) for later use. For the exploitation of heat is normally used a heat exchanger which can also be immersed in the storage material and crossed by a working fluid - typically water, steam or other carriers - capable to absorb and transport heat energy contained therein.

As storage systems, such as graphite, are able to reach high temperatures (even 2000 ° C), the limit of technology is set out by the thermal resistance of the metal tube bundles in charge for heat removal.

In addition, the storage in solids does not allow - for the thermal inertia of the same and for the low thermal diffusivity values - to follow the trend of the required power as atmospheric conditions and day-night cycles vary.

Based on the foregoing, therefore, a difficulty of the known systems is related to the low efficiency due to the limited maximum temperatures reachable and their lack of flexibility to follow the trend of the load as atmospheric conditions vary.

WO 2009/147651 discloses a solar energy generator including means for adsorbing and accumulating the heat of the solar rays concentrated by a concentration system. Such means have a chamber that houses a plurality of capsules containing a two-phase material with a phase transition temperature in the range of the one that can be reached inside the chamber. Such means are operatively connected to a heat utilisation plant.

US 2003/015150 discloses a circulating fluidized bed boiler having one or more bubbling fluidized bed enclosures.

### Summary of the invention

The technical problem underlying the present invention is therefore to overcome the drawbacks mentioned above with reference to the state of the art.

The above problem is solved by a device according to claim 1 and by a method according to claim 17.

Preferred features of the invention are object of the dependent claims.

An important advantage of the invention is that it allows to efficiently and reliably produce a storage of solar thermal energy, minimizing thermal stress of the heat exchangers and increasing the efficiency of the heat exchange to the working fluid, through the use of a fluidisable granular bed that can play the dual role of exchange system and storage system of the collected heat. The basis of such use are the favourable features of the heat transfer of fluidised beds and the efficient heat transport due to the mobility of the granular phase. Both these features are linked to the possibility of giving a solid granular rheological behaviour that can be assimilated to that of a liquid, thanks precisely to its fluidisation.

Synergistically with the foregoing, the separation of the storing step of the heat received from the concentrated solar radiation from that of releasing of such heat and the resulting potential energy production - i.e. generally of heat transfer to the working fluid - allows to dramatically improve the versatility and the overall efficiency of the plant.

In a preferred embodiment, such separation is made possible by separating the fluidisation gas circuit from that of the working fluid.

In a particularly preferred embodiment, the device comprises two fluidisable beds, one essentially in charge of storing and a second, which receives heat from the first, primarily in charge of exchange with the working fluid. Also according to this embodiment, the fluidisation of beds is made by using air taken from the environment as fluidising gas.

To achieve maximum energy recovery, the hot air outlet from fluidised beds is sent to an air-air exchanger where it releases its heat to the cold fluidisation air drawn from the environment.

During the storing step the first bed receives heat from a field of heliostats through a receiver and is held in fluidisation conditions by air that is heated inside the air to air heat exchanger mentioned above.

In case be necessary to keep the stored heat at a step with no energy production, the first storage bed is kept at rest.

During a step of energy production, the now fluidised storage bed will exchange heat with the generation fluid bed adjacent to it and possibly separated by septums, preferably of metallic type. Inside the generation bed it is immersed the tube bundle crossed by the working fluid. Also in this case, the fluidisation air will be preheated using the air-air exchanger. Operating in this way, the fluidisation air compression system will be operated at room temperature as well as the filtration system of the air outlet from the fluidised bed where the presence of elutriate solid particulate is possible.

Having concentrated the heat exchange to the benefit of the working fluid in the fluidised generation bed will, because of high heat transfer coefficients of fluidised beds, minimize the surfaces of the tube bundle and then the use of precious materials for the manufacture of the same.

Briefly, the system can be substantially divided into three bulks, namely a bulk for storage (the first fluidised bed, in the embodiment shown above), a bulk for exchange towards the working fluid (the second fluidized bed, in the embodiment shown above) and a bulk for heat recovery (heat exchanger air / air still in the preferred embodiment above mentioned), such bulks being linked to one another allowing to achieve a system that can operate with great flexibility and efficiency.

Other advantages, features and modality od use of the present invention will be apparent from the following detailed description of some embodiments, presented by way of example and not for limitative purposes.

### Brief description of the drawings

It will be referred to the figures of the annexed drawings, wherein:
- Figure 1 shows a plant layout according to a preferred embodiment of the invention;
- Figure 1a shows a schematic section/front view of the layout of a part of the plant of figure 1, which incorporates a tower structure with air/air heat exchanger and shows a partitioning of a cash distribution, a fluidisation gas inlet circuit and its path;

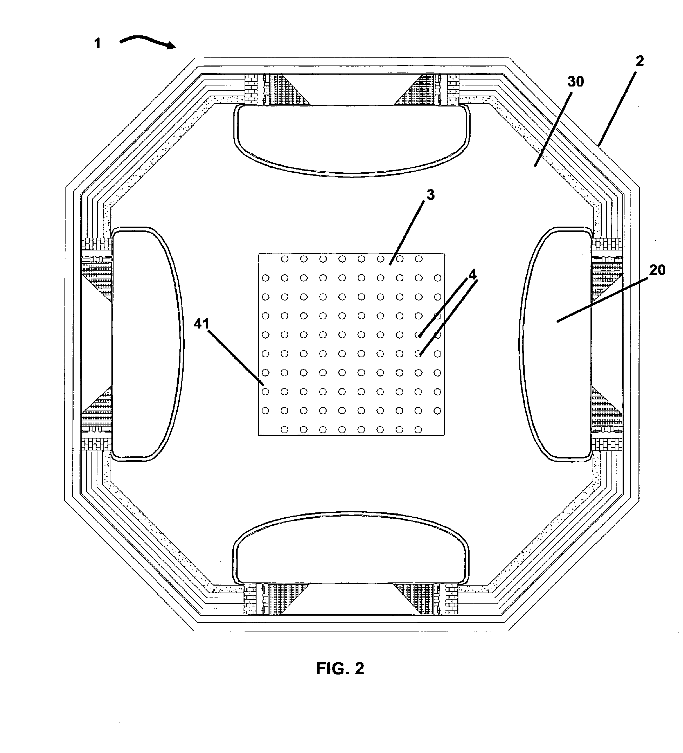

- Figure 2 shows a plan section of the portion of plant of Figure 1a, showing the arrangement of tubes of a heat exchanger that receives the working fluid and the partitioning of a first bed of fluidisable particles that acts as a means of storing and a second bed of fluidisable particles committed to heat exchange with the working fluid, and
- Figures 3 and 3a refer to a release and storage device usable in the plant of Figure 1, which device uses fuel gas as auxiliary energy source and it is shown respectively in side section and plan view.

### Detailed description of preferred embodiments of the invention

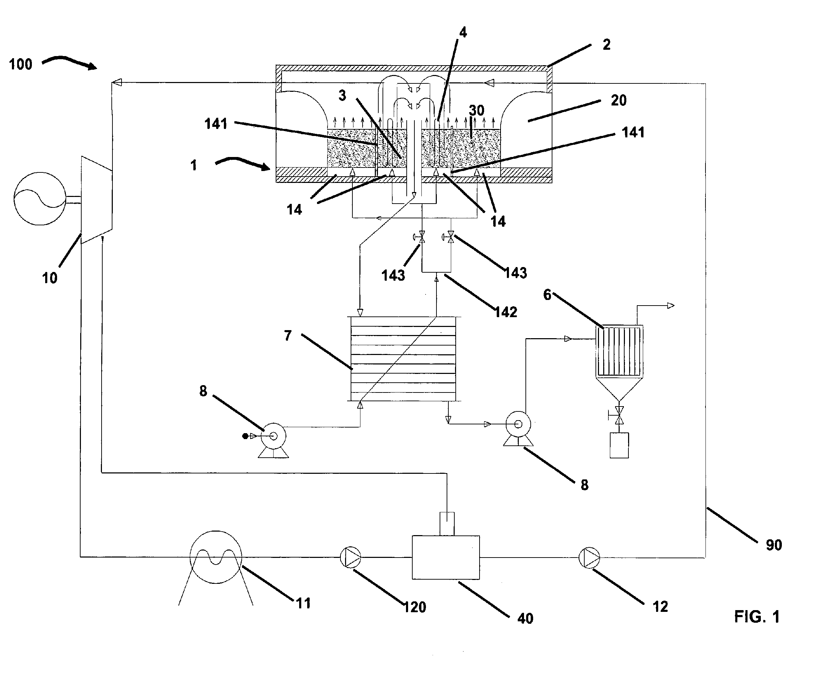

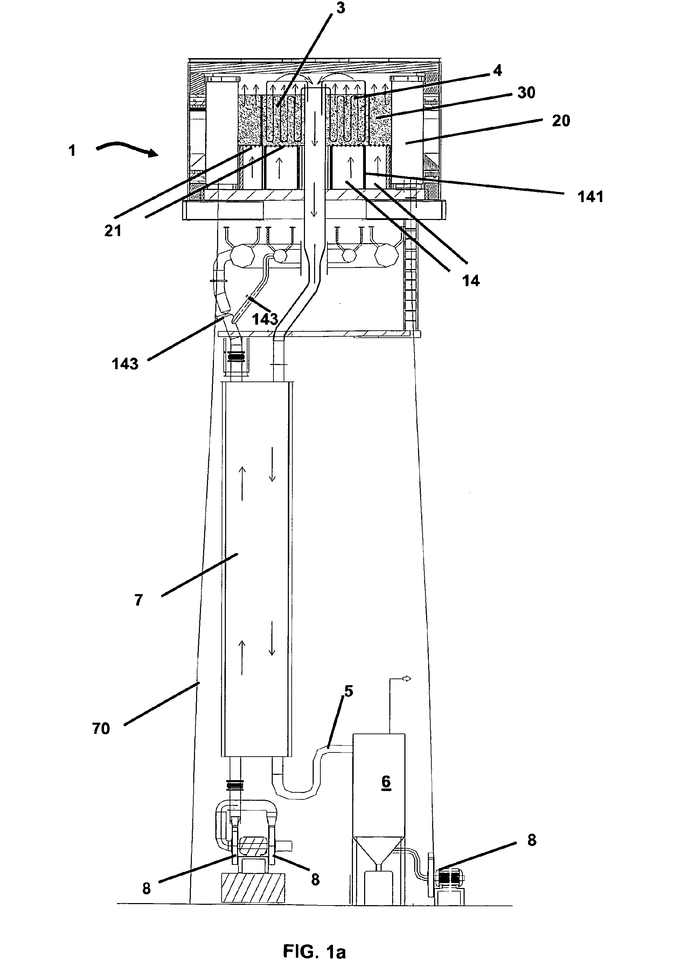

With reference initially to Figures 1 and 1a, an electrical power production plant from concentrated solar radiation according to a preferred embodiment of the invention is globally denoted by 100.

The plant 100 in its turn incorporates one or more devices 1 for storing thermal energy received by the concentrated solar radiation and for releasing such energy to a working fluid, the latter being typically water or steam.

The device 1 is indeed apt to store the thermal energy that originates from a solar radiation conveyed/concentrated on it for example by tracking heliostats.

The device 1 comprises a containment casing 2, preferably made of metal, thermally insulated to minimize heat loss to the surrounding environment.

The casing 2 may contain one or more receiving surfaces 20 upon which solar radiation is concentrated.

At the base of the case 2 a feeding inlet 21 for a fluidising gas is obtained, whose role will be clarified shortly. At the inlet 21 there is a distribution septum, or distributor, for simplicity's sake also identified by 21, of such fluidisation gas, apt to enable a uniform entry of the latter and at the same time providing support for one or more beds of fluidisable particles 3, 30 described below.

Within the casing 2 there is a storage zone, in the form of a first bed of fluidisable particles 30 suitable for thermal storage according to favourite features described below. In the present embodiment, the area of the storage bed 30 is placed immediately at the receiving surfaces 20, close to the inner surfaces of the case 2, so as to be directly affected by the solar radiation concentrated upon said receiving surfaces 20.

Also within the casing 2 and in the most central zone of the device 1 is then provided a second bed of fluidised particles 3, which may be continuous with or separate from the storage bed 30 and whose function is to release the thermal energy stored in the latter to the working fluid, as better explained later. To this end, within the bed of particles 3, or close to this, heat exchange elements are arranged - and in particular tube bundles 4 of a heat exchanger - which are flown, when in use, by the working fluid.

In a preferred further embodiment, the two beds of particles 3, 30 may be adjacent portions of the same bed selectively fluidisable.

As mentioned, the inlet 21 of the device 1 is capable of allowing the feeding within the casing 2 - and specifically through the base of beds of particles 3, 30 - of a fluidisation gas, which in this preferred configuration is air. In particular, the overall arrangement is such that the gas pushed through the distribution septum 21, can move the particles of the bed 3 and/or 30 so as to generate a corresponding flow/motion of particles suitable for the mutual heat exchange between particles of the same bed 30 and/or between the latter and the inner part of the receiving surfaces 20 or between particles of portions of the bed adjacent to each other, between particles of two beds 3, 30 or between the particles of the bed 3 and the tube bundles 4.

The position of the tube bundles 4 with respect to the bed of particles 3, or rather the exposure of the surfaces of the tubes with respect to the bed of particles, is such as to maximize the rate of heat transfer, the latter being proportional to the product of the heat exchange coefficient and the surface affected by the same heat exchange.

The tube bundles 4 can be totally or partially immersed in the bed of particles 3 or facing it. The choice lies in the modality of handling utilised for the device and the minimum and maximum heights of the bed of particles as a function of the fluidisation air velocity: as the velocity increases, the surface of the tube bundle affected by the heat exchange increases. For enhanced versatility of the plant, a means to vary the fluidisation air velocity, and therefore its flow, is in fact provided.

Therefore, varying the crossing velocity of the fluidising gas, the overall heat transfer coefficient between the fluidised bed and the exchange surface can be monitored and modified, resulting in regulation flexibility of the amount of transferred thermal power.

It can thus be obtained a substantial reduction of heat transfer in the absence of fluidisation or with gas velocity less than the minimum fluidisation velocity.

In addition, it is possible to vary the height of the first storage bed 30 and/or the release bed 3 by varying the amount of particle charge of the bed, such variation can be operated when heated, during operation, using a suitable exhaust and loading system of particles associated with each device 1 or groups of similar devices. Acting on the height of beds 30, 3 both in terms of particulate material present in the bed when fixed, either by varying the fluidisation velocity, it allows more levers of action that make the handling of device 1 and then the system 100 extremely flexible.

As best illustrated in Figure 1a, in the present example the device 1 has or is associated with an elevated tower structure 70. At the central zone of the latter is located an exchanger gas/gas 7, in the present example of air/air type, which extends vertically within the support structure of the device itself.

The environment inside the device 1 is communicating with the air-air exchanger 7, in the example at its central zone. In particular, the base of the device 1 communicates with the section of the exchanger in which hot air outlet from the bed of particles 3 and/or 30 flows, while section 7 of the air-air exchanger from which the preheated environment air exits is connected to the distribution septum 21 at the base of particles bed 3, 30, through a manifold or air chamber 14 which contributes to uniform the air flow inlet in the device 1.

In this way, the exchanger 7 allows to preheat in countercurrent environment air inlet in the distributor 21 at the expense of the fluidisation hot air outlet from the particles bed of 3 and/or 30, and then to recover the heat content of fluidisation air outlet from the bed.

As said, the fluidisation air circuit requires cold environment air to be forced by a means of forced circulation, in particular one or more blower/compressor 8, inside the air-air exchanger 7 and to be preheated along the way at the expense of the fluidising hot air which, leaving the particles bed 3, 30, is forced in countercurrent inside said exchanger 7. The preheated environment air reaches the air chamber 14 and the distribution septum 21 through a feeding manifold circuit 142. The air oulet from the particles bed 3, 30, cooled after having passed through the air-air heat exchanger 7, is fed, through a downflow pipe 5, a dust separator 6, or dust exhast, and it is then expelled to external environment.

Preferably, the dust separator 6 - typically of inertial impactors - type or equivalent devices having low pressure drop and cycloidal operation - is located at the base of the structure of the device 1 in line with the down flow pipe 5 and provides then to dedust the fluidisation air from any elutriato out of the particles of beds 3, 30.

As already mentioned, the particles bed 3 can be physically separated from the particles bed 30 in case through septums 41, however on the whole displaying a modular structure allowing a selective fluidisation of the bed zones. In general, device 1 allows a selective and/or differentiated fluidisation of one or more portions of particles bed 3 and 30 and/or a selective and/or differentiated fluidisation of the beds or portions thereof.

In the present example, such selective fluidisation is achieved through a compartmentalization of both the air chamber 14, by means of septums 141, and the feeding circuit 142 by means of valves 143, allowing the feeding of air only at portions of bed 3 and/or 30 selectable according to specific needs of storage or of steam/power production.

It is thus possible to operate portions of the bed as thermal switches that close the heat transfer circuit only if fluidised. Said monitored and selective fluidisation of zones of the bed granular means ensures heat extraction continuity and plant's flexibility with respect to the energy demand downstream.

Moreover, in the present example it is provided a partitioning of the air chamber 14 also at an area of the bed adjacent to receiving surfaces 20. This configuration allows, in the absence of solar radiation, to significantly reduce heat loss stored in the first bed 30 towards the external environment through the same receiving surfaces 20. This partitioning is as well operated by means of the aforementioned automatic valves 143 timed and/or handled by a signal from a irradiance sensor (solarimeter for example, pyranometer or equivalent equipments) associated with each device 1 or with groups of devices.

The regime of fluidisation of the bed particles is preferably ebullient or in any case such to maximize the heat transfer coefficient.

The choice of particle material for storage and release beds 3 and 30 is based in particular on the poor aptitude for abrasion and fragmentation, in response to the need to minimize the phenomenon of bed particles elutriation so as to limit the production and transportation of fines in the fluidisation air. Based on these considerations, a preferred configuration favours the use, for bed particles, of granular material inert to oxidation, with a regular shape, preferably spherical and/or preferably having the size of the order of 50 to 500 microns, and such that said dimensions be preferably native, that is not resulting from the aggregation of smaller particles.

In the example in Figure 1, the working fluid is water in a liquid state which receives during the crossing of the heat exchanger 4 thermal energy transferred from the particles of the bed 3 to become superheated steam. Said steam in pre-determined conditions of temperature and pressure is then utilised to produce electricity expanding in a steam turbine associated with a generator 10.

As shown in Figure 1, the working fluid circuit provides ducts 90 that define the tube bundles 4 within the device 1, and in the present example is provided the aforementioned steam turbine 10 connected to an electricity generator, a condenser 11, a getter 40 with a bleed in turbine 40, a supply pump 12, an extraction pump 120 or equivalent means to those just mentioned.

The described configuration allows the remarkable advantage of separating the process of thermal energy storage from the steam generating process.

In the storing step, solar energy is concentrated at the receiving surfaces 20 and through fluidisation of the storage bed 30, or part thereof, the thermal energy is transferred precisely from the surfaces 20 to the particles of bed 30. As said this step is independent from the production phase. In a regime of sole storing only the first bed 30 is fluidised.

In the production phase the second release bed 3 is also activated, so that the heat transfer occurs from the storage bed 30 to the particles of the release bed 3, from these to the tube bundles 4 and then to the working fluid flowing in the latter.

Therefore, the working fluid which crosses the tube bundles 4 receives from the second bed 30 thermal energy stored by the first bed 30, where heat transfer takes place by activating the beds 3, 30 that is by fluidising particles of the zones of bed 30 and 3. The thermal energy transferred to the working fluid can also be used for industrial purposes different from the example herewith considered.

In particular, in the above description it has been referred as a way of example to the application of the device to an electrical power production plant, stand-alone. It will nevertheless be understood that the possible applications of the device are large and related to the production of steam or heat for industrial plant like power plants, desalination, district heating, and so on.

With this configuration, even in the absence of solar energy - such as at night - it is ensured continuity of operation and delivery of steam and thus heat output from the device 1.

In particular, the size of the device 1, the particle beds 3, 30, the surfaces of the tube bundles 4 and the speed range of the fluidisation gas, may be such to assure storing of thermal energy during sunshine hours and release of the same during night hours to the heat exchanger through fluidisation of particles of beds 3, 30.

In addition, as previously mentioned, using a modular structure of the fluidised bed and modulating for each section and the fluidisation velocity of the particles themselves, as well as the height of the particles bed, it is possible to adjust the amount of thermal energy transferred to the tube bundles, by choosing to dedicate one or more sections to the heat transfer or to the storing through a selective and/or differentiated fluidisation of said sections, ensuring continuous operation of the plant.

Moreover, in the eventuality of plants that provide a variety of devices 1, the ability to adjust for each device the amount of heat transferred to the working fluid is necessary to maintain a constant temperature and pressure of the steam produced, and it allows the advantage of maintaining constant, decreasing or increasing the temperature of the working fluid or, at the same temperature, increasing the flow of working fluid.

The sizing of the devices 1 and the operational logic can be coordinated to achieve a given energy output even in the absence of solar radiation.

It is also possible, depending on the needs of the plant downstream, to manage single devices in such a way that, within 24 hours, part of these work only for storing and part in production or to vary the fluidisation velocity of each unit resulting in overall changes of the thermal power produced. For a given stored thermal energy, this allows to release it quickly to higher power or for extended periods at lower power.

In a different embodiment (not shown), it is provided the presence of a partialisation system, a sort of shutter, of the receiving surfaces 20 by means of insulating septums. Said septums, whose activation can be automated and follow the sun trajectory, allow to isolate the portion of the storage bed 30 corresponding to the obscured zone of surface receiver 20 and thus prevent re-radiation to the outside by said portion of the bed when the same receiving surface 20 is not affected by the incident radiation. According to another preferred embodiment of the invention that can be used in combination with all other configurations above described, it is provided the use of gaseous fuel within the fluidised bed, to compensate for the prolonged absence of sun exposure and/or to ensure the achievement of a certain power level according to the needs downstream the production plant.

An important advantage derives from the possibility of burning said gaseous fuel directly into the fluidised bed. Usually, for devices of prior art this operation is carried out in production units separated from the main manufacturing plant.

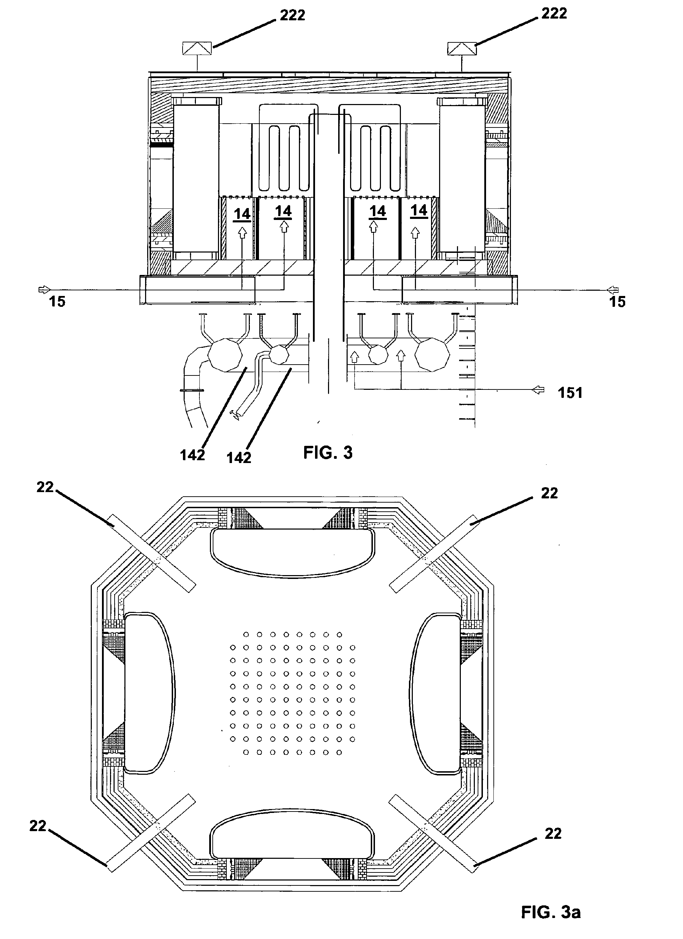

This configuration is schematically shown in Figure 3 and 3a, which shows a possible circuit for the fuel gas 15 - 151. The latter is such as to provide inlets to each sector of the air chamber 14 in which the pre-mixing of fuel gas with the preheated fluidising air takes place or in the distribution circuit of the fluidising gas 151.

In the presence of combustible gas, the device 1 is equipped with one or more torches 22 inserted into the environment of the device 1 for the trigger of combustion and to ensure the system from any dangerous accumulation of gas inside the device, and one or more rupture discs 222 on the case 2. These expedients - like others that may be applicable - are aimed at preventing the risk of explosion.

As for the burning of gas per se, this is known technique and it won't be described further in the following.

The use of this additional configuration is made even more convenient by the fact that the regulations governing the production of energy from renewable sources admit that a minimum amount, usually less than or equal to 15% of the rated power, be produced by burning fuels fossils.

It will be better understood at this point that the invention has considerable advantages in terms of:
- sizing of the plant, and in particular of storage and release devices and of the relative structure that are very compact - obviously deriving from the preferred configuration in which the air/air exchanger extends in height within the support structure of the device itself;
- sizing and operation of the compressor-blowers 8 which elaborate a cold fluid, that environment air;
- sizing and operation of dust exhaust 6 that like the blower - compressor 8 works with exhausted fluidisation air of at low temperature (about 100 ° C);
- sizing of the tube bundles 4, which are being drastically downsized the steps of preheating evaporation and overheating of the working fluid being assigned to the heat exchange within the bed with typical coefficients of 300 to 500 W/m2K.

It will be finally understood how the invention provides also a method of storage and heat exchange as defined in the claims that follow and presenting the same preferred features as set forth above in relation to the preferred forms and various embodiments of the device and the plant of the invention.

The present invention has been described so far with reference to preferred embodiments. It is intended that there may be other embodiments which refer to the same inventive concept, that may fall within the scope of the appended claims.

## Claims

1. A device (1) for storing and releasing heat energy apt to receive a concentrated solar radiation, which device (1) comprises:
- at least one bed (3, 30) of fluidisable particles, arranged at least partly at receiving surfaces (20) for such radiation;
- feeding means (14, 142, 21) for feeding a fluidisation gas for the fluidisation of said particles; and
- heat exchange elements (4) flown through, in use, by an operating fluid and arranged at or in proximity of said bed (3, 30) of fluidisable particles,
wherein the overall arrangement is such that, in use, portions (3, 30) of said bed of particles are apt to be selectively moved by the fluidisation gas for storing heat energy received from solar radiation in a storing step and for releasing stored heat energy to said heat exchange elements (4) in a releasing step,
and **characterized in that** the overall arrangement is such to allow an independent activation of the heat storing step and of the heat releasing step.

2. The device (1) according to claim 1, wherein said bed of particles in its turn comprises:
- a first storing portion (30), apt to store heat energy received from concentrated solar radiation and arranged at the receiving surfaces (20) for the solar radiation; and
- a second releasing portion (3), arranged adjacently to said first portion (30) and apt to release heat energy stored by the latter to said heat exchange elements (4),
wherein said first storing portion (30) and said second releasing portion (3) are apt to carry out respectively said storing step and said releasing step by a respective fluidisation.

3. The device (1) according to the preceding claim, wherein said first (30) and second (3) portion of said bed of particles are received within a common containment casing (2).

4. The device (1) according to any one of the preceding claims, wherein said heat exchange elements (4) are arranged so as to be in contact with at least part (3) of said bed (3, 30) of particles and/or so as to be lapped against, in use, by at least part (3) of said bed (3, 30) when fluidised by said fluidisation gas.

5. The device (1) according to any one of the preceding claims, wherein said heat exchange elements are tube bundles (4).

6. The device (1) according to any one of the preceding claims, comprising feeding means (15,151) and means (22, 222) for the safe combustion of a combustible gas within said bed (3, 30) of particles or part thereof.

7. The device (1) according to any one of the preceding claims, wherein said feeding means (14, 142, 21) comprises a compartmentalization (141) apt to allow a selective and/or differentiated fluidisation of one or more parts of said bed (3, 30) of particles by the fluidisation gas and/or a selective and/or differentiated fluidisation of said first (30) and second (3) portion of said bed of particles or of parts of the latter.

8. The device (1) according to any one of the preceding claims, wherein said independent activation of the storing and releasing steps is obtained by a separation of the circuits of the operating fluid and of the fluidisation gas.

9. The device (1) according to any one of the preceding claims, comprising a gas/gas, preferably air/air heat exchanger (7) wherein the overall arrangement is such that, in use, in such exchanger (7) are fed a first cold gas which is the fluidisation gas to be employed for the fluidisation of said bed (3, 30) of particles or of said first (30) and/or second (3) portion thereof and a second hot gas which is the fluidisation gas outlet from said bed (3, 30) of particles or from said first (30) and/or second (3) portion thereof.

10. The device (1) according to the preceding claim, which is arranged on a tower structure (70) housing therein said gas/gas exchanger (7).

11. The device (1) according to any one of the preceding claims, which is suitable for the use of air as fluidisation gas.

12. The device (1) according to any one of the preceding claims, comprising means (8) for the forced circulation of the fluidisation gas.

13. The device (1) according to any one of the preceding claims, comprising means apt to selectively vary the velocity of the fluidisation gas.

14. The device (1) according to any one of the preceding claims, comprising means (6) for dedusting the fluidisation gas, arranged downstream of a fluidisation zone of said bed (3, 30) of particles.

15. A plant (100) for producing steam or heat for industrial uses, comprising one or more devices (1) according to any one of the preceding claims.

16. The plant (100) according to the preceding claim, which is an electrical power production plant.

17. A method for producing steam or heat for industrial uses from a concentrated solar radiation, providing the employ of a bed (3, 30) of fluidisable particles apt to store heat energy of solar origin and selectively movable by a fluidisation gas, which method is **characterised in that** it comprises:
- a first step of storing heat energy received from the concentrated solar radiation by moving of a first portion (30) of said bed of particles; and
- a second step of releasing heat energy stored in said first step to heat exchange elements (4) flown through by an operating fluid,
- **characterized in that** said steps of storing and releasing heat can be activated the one independently from the other.

18. The method according to the preceding claim, wherein said independent activation of the storing and releasing steps is attained by a thermal separation of the circuits of the operating fluid and of the fluidisation gas.

19. The method according to claim 17 or 18, providing a step of gas/gas, preferably air/air, heat exchange between a first cold gas which is the fluidisation gas to be employed for the fluidisation of portions of said bed (3, 30) of particles and a second hot gas which is the fluidisation gas outlet from said portions of said bed (3, 30) of particles.

20. The method according to any one of the claims 17 to 19, wherein said fluidisation gas is air.

21. The method according to any one of the claims 17 to 20, wherein a selective variation of the velocity of the fluidisation gas is provided.

22. The method according to any one of the claims 17 to 21, which is a method of producing electrical power.

23. The method according to any one of the claims 17 to 22, providing a combustion of gaseous fossil fuel within said bed (3, 30) of particles or parts thereof.

## Patentansprüche

1. Vorrichtung (1) zur Speicherung und Abgabe von Wärmeenergie, die geeignet ist, konzentrierte Sonnenstrahlung aufzunehmen, wobei die Vorrichtung (1) umfasst:
- zumindest ein zumindest teilweise auf für die Strahlung vorgesehenen Aufnahmeflächen (20) angeordnetes Bett (3, 30) fluidisierbarer Partikel;
- Zuführmittel (14, 142, 21) zur Zuführung eines Fluidisierungsgases zur Fluidisierung der Partikel; und
- Wärmetauscherelemente (4), die im Einsatz von einem Betriebsfluid durchströmt werden und an oder in der Nähe des Bettes (3, 30) fluidisierbarer Partikel angeordnet sind,
wobei die Gesamtanordnung dazu ausgebildet ist, dass im Betrieb Abschnitte (3, 30) des Bettes der Partikel geeignet sind, von dem Fluidisierungsgas selektiv bewegt zu werden, um von der Sonnenstrahlung aufgenommene Wärmeenergie in einem Speicherschritt zu speichern und um die gespeicherte Wärmeenergie an die Wärmetauscherelemente (4) in einem Abgabeschritt abzugeben,
und **dadurch gekennzeichnet, dass** die Gesamtanordnung dazu ausgebildet ist, eine unabhängige Aktivierung des Wärmespeicherschritts und des Wärmeabgabeschritts zu erlauben.

2. Vorrichtung (1) nach Anspruch 1, wobei das Bett der Partikel im Gegenzug umfasst:
- einen ersten Speicherabschnitt (30), geeignet, um von der konzentrierten Sonnenstrahlung aufgenommene Wärmeenergie zu speichern und angeordnet auf den Aufnahmeflächen (20) für die Sonnenstrahlung; und
- einen zweiten Abgabeabschnitt (3), benachbart zu dem ersten Abschnitt (30) angeordnet und geeignet, um die von dem Zuletztgenannten gespeicherte Wärmeenergie an die Wärmetauscherelemente (4) abzugeben,
wobei der erste Speicherabschnitt (30) und der zweite Abgabeabschnitt (3) geeignet sind, um entsprechend den Speicherschritt und den Abgabeschritt durch eine entsprechende Fluidisierung auszuführen.

3. Vorrichtung (1) nach dem vorangehenden Anspruch, wobei der erste (30) und zweite (3) Abschnitt des Bettes der Partikel in einem gemeinsamen Eindämmungsgehäuse (2) aufgenommen sind.

4. Vorrichtung (1) nach einem der vorangehenden Ansprüche, wobei die Wärmetauscherelemente (4) angeordnet sind, um zumindest mit dem Abschnitt (3) des Bettes (3, 30) der Partikel in Kontakt zu stehen und/oder um im Einsatz zumindest über den Abschnitt (3) des Bettes (3, 30) angespült zu werden, wenn es durch das Fluidisierungsgas fluidisiert ist.

5. Vorrichtung (1) nach einem der vorangehenden Ansprüche, wobei die Wärmetauscherlemente Rohrbündel (4) sind.

6. Vorrichtung (1) nach einem der vorangehenden Ansprüche, umfassend Zuführmittel (15, 151) und Mittel (22, 222) für die sichere Verbrennung eines Verbrennungsgases mit dem Bett (3, 30) der Partikel oder dessen Abschnitt.

7. Vorrichtung (1) nach einem der vorangehenden Ansprüche, wobei die Zuführmittel (14, 142, 21) eine Untergliederung (141) umfassen, die geeignet ist, eine selektive und/oder differenzierte Fluidisierung eines oder mehrerer Abschnitte des Bettes (3, 30) der Partikel durch das Fluidisierungsgas und/oder eine selektive und/oder differenzierte Fluidisierung des ersten (30) und zweiten (3) Abschnitts des Bettes der Partikel oder von Abschnitten des Zuletztgenannten zu ermöglichen.

8. Vorrichtung (1) nach einem der vorangehenden Ansprüche, wobei die unabhängige Aktivierung der Speicher- und Abgabeschritte durch eine Trennung der Leitungen des Betriebsfluides und des Fluidisierungsgases erzielt ist.

9. Vorrichtung (1) nach einem der vorangehenden Ansprüche, umfassend ein Gas/Gas-, vorzugsweise Luft/Luft-Wärmetauscher (7), wobei die Gesamtanordnung im Einsatz derartig ist, dass dem Tauscher (7) ein erstes kaltes Gas, das das für die Fluidisierung des Bettes (3, 30) der Partikel oder dessen ersten (30) und/oder zweiten (3) Abschnitts eingesetzte Fluididsierungsgas ist, und ein zweites heißes Gas, das das aus dem Bett (3, 30) der Partikel oder aus dessen ersten (30) und/oder zweiten (3) Abschnitt ausgelassene Fluidisierungsgas ist, zugeführt sind.

10. Vorrichtung (1) nach dem vorangehenden Anspruch, die auf einer Turmstruktur (70) angeordnet ist, in der der Gas/Gas-Tauscher (7) untergebracht ist.

11. Vorrichtung (1) nach einem der vorangehenden Ansprüche, die für die Nutzung von Luft als Fluidisierungsgas geeignet ist.

12. Vorrichtung (1) nach einem der vorangehenden Ansprüche, umfassend Mittel (8) für das erzwungene Zirkulieren des Fluidisierungsgases.

13. Vorrichtung (1) nach einem der vorangehenden Ansprüche, umfassend Mittel, die geeignet sind, die Geschwindigkeit des Fluidisierungsgases selektiv zu ändern.

14. Vorrichtung (1) nach einem der vorangehenden Ansprüche, umfassend Mittel (6) zur Entstaubung des Fluidisierungsgases, die stromabwärts einer Fluidisierungszone des Bettes (3, 30) der Partikel angeordnet sind.

15. Kraftwerk (100) zur Erzeugung von Dampf oder Wärme zur industriellen Nutzung, umfassend ein oder mehrere Vorrichtungen (1) nach einem der vorangehenden Ansprüche.

16. Kraftwerk (100) nach dem vorangehenden Anspruch, das ein elektrisches Stromerzeugungskraftwerk ist.

17. Verfahren zur Erzeugung von Dampf oder Wärme zur industriellen Nutzung aus einer konzentrierten Sonnenstrahlung, Bereitstellen des Einsatzes eines Bettes (3, 30) fluidisierbarer Partikel, das geeignet ist, Wärmeenergie solaren Ursprungs zu speichern, und das durch ein Fluidisierungsgas selektiv bewegt werden kann, wobei das Verfahren **dadurch gekennzeichnet ist, dass** es umfasst:
- einen ersten Schritt des Speicherns von Wärmeenergie, die von der konzentrierten Sonnenstrahlung durch Bewegen eines ersten Abschnitts (30) des Bettes der Partikel aufgenommen wird; und
- einen zweiten Schritt des Abgebens der in dem ersten Schritt gespeicherten Wärmeenergie an Wärmetauscherelemente (4), die von einem Betriebsfluid durchströmt werden,
- **dadurch gekennzeichnet, dass** die Schritte des Speicherns und Abgebens von Wärme unabhängig voneinander aktiviert werden können.

18. Verfahren nach dem vorangehenden Anspruch, wobei die unabhängige Aktivierung der Speicher- und Abgebensschritte durch eine thermische Trennung der Leitungen des Betriebsfluides und des Fluidisierungsgases erzielt wird.

19. Verfahren nach Anspruch 17 oder 18, Bereitstellen eines Schrittes Gas/Gas-, vorzugsweise Luft/Luft-, Wärmeaustausches zwischen einem kalten Gas, das das für die Fluidisierung der Abschnitte des Bettes (3, 30) der Partikel eingesetzte Fluidisierungsgas ist, und einem zweiten heißen Gas, das das aus den Abschnitten des Bettes (3, 30) der Partikel ausgelassene Fluidisierungsgas ist.

20. Verfahren nach einem der Ansprüche 17 bis 19, wobei das Fluidisierungsgas Luft ist.

21. Verfahren nach einem der Ansprüche 17 bis 20, wobei eine selektive Veränderung der Geschwindigkeit des Fluidisierungsgas bereitgestellt wird.

22. Verfahren nach einem der Ansprüche 17 bis 21, das ein Verfahren zur Erzeugung elektrischen Stroms ist.

23. Verfahren nach einem der Ansprüche 17 bis 22, Bereitstsellen einer Verbrennung gasförmigen fossilen Brennstoffs in dem Bett (3, 30) der Partikel oder dessen Abschnitten.

## Revendications

1. Dispositif (1) pour stocker et restituer de l'énergie thermique, capable de recevoir un rayonnement solaire concentré, lequel dispositif (1) comprend :
- au moins un lit (3, 30) de particules fluidisables, disposé au moins en partie sur des surfaces de réception (20) d'un tel rayonnement;
- des moyens d'alimentation (14, 142, 21) pour acheminer un gaz de fluidisation pour la fluidisation desdites particules; et
- des éléments échangeurs de chaleur (4) parcourus, lors de l'utilisation, par un fluide de travail, et disposés sur ledit lit (3, 30) de particules fluidisables ou à proximité de celui-ci,
dans lequel l'agencement global est tel que, lors de l'utilisation, des parties (3, 30) dudit lit de particules peuvent être déplacées de façon sélective par le gaz de fluidisation pour stocker l'énergie thermique, reçue du rayonnement solaire, au cours d'une étape de stockage, et pour restituer l'énergie thermique stockée auxdits éléments échangeurs de chaleur (4), au cours d'une étape de restitution,
et **caractérisé en ce que** l'agencement global est tel qu'il permet une activation indépendante de l'étape de stockage de chaleur et de l'étape de restitution de chaleur.

2. Dispositif (1) selon la revendication 1, dans lequel ledit lit de particules comprend à son tour :
- une première partie de stockage (30), capable de stocker de l'énergie thermique reçue du rayonnement solaire concentré et disposée sur les surfaces de réception (20) pour le rayonnement solaire; et
- une deuxième partie de restitution (3), disposée de façon adjacente à ladite première partie (30) et capable de restituer l'énergie thermique, stockée par cette dernière, auxdits éléments échangeurs de chaleur (4),
où ladite première partie de stockage (30) et ladite partie de restitution (3) sont capables d' exécuter respectivement ladite étape de stockage et ladite étape de restitution par une fluidisation respective.

3. Dispositif (1) selon la revendication précédente, dans lequel lesdites première (30) et deuxième (3) parties dudit lit de particules sont reçues dans une enveloppe de confinement (2) commune.

4. Dispositif (1) selon l'une quelconque des revendications précédentes, dans lequel lesdits éléments échangeurs de chaleur (4) sont disposés de manière à être en contact avec au moins la partie (3) dudit lit (3, 30) de particules et/ou de manière à être en chevauchement, lors de l'utilisation, avec au moins la partie (3) dudit lit (3, 30) lorsqu'il est fluidisé par ledit gaz de fluidisation.

5. Dispositif (1) selon l'une quelconque des revendications précédentes, dans lequel lesdits éléments échangeurs de chaleur (4) sont des faisceaux de tubes (4).

6. Dispositif (1) selon l'une quelconque des revendications précédentes, comprenant des moyens d'alimentation (15, 151) et des moyens (22, 222) pour la combustion sûre d'un gaz combustible dans ledit lit (3, 30) de particules ou une partie de celui-ci.

7. Dispositif (1) selon l'une quelconque des revendications précédentes, dans lequel lesdits moyens d'alimentation (14, 142, 21) présentent une compartimentation (141) capable de permettre une fluidisation sélective et/ou différenciée d'une ou plusieurs parties dudit lit (3, 30) de particules par le gaz de fluidisation et/ou une fluidisation différenciée sélective et/ou différenciée desdites première (30) et deuxième (3) parties dudit lit de particules ou de parties de celui-ci.

8. Dispositif (1) selon l'une quelconque des revendications précédentes, dans lequel ladite activation indépendante des étapes de stockage et de restitution est obtenue par une séparation des circuits du fluide de travail et du gaz de fluidisation.

9. Dispositif (1) selon l'une quelconque des revendications précédentes, comprenant un échangeur de chaleur (7) gaz/gaz, de préférence air/air, dans lequel l'agencement global est tel que, lors de l'utilisation, sont envoyés dans un tel échangeur (7), un premier gaz froid, qui est le gaz de fluidisation devant être utilisé pour la fluidisation dudit lit (3, 30) de particules ou desdites première (30) et/ou deuxième (30) parties, et un deuxième gaz chaud qui est le gaz de fluidisation évacué dudit lit (3, 30) de particules ou desdites première (30) et/ou deuxième (3) parties de celui-ci.

10. Dispositif (1) selon la revendication précédente, qui est disposé sur une structure de tour (70) renfermant ledit échangeur gaz/gaz (7).

11. Dispositif (1) selon l'une quelconque des revendications précédentes, qui est adapté à l'utilisation de l'air en tant que gaz de fluidisation.

12. Dispositif (1) selon l'une quelconque des revendications précédentes, comprenant des moyens (8) pour la circulation forcée du gaz de fluidisation.

13. Dispositif (1) selon l'une quelconque des revendications précédentes, comprenant un moyen capable de modifier de façon sélective la vitesse du gaz de fluidisation.

14. Dispositif (1) selon l'une quelconque des revendications précédentes, comprenant un moyen (6) pour dépoussiérer le gaz de fluidisation, disposé en aval d'une zone de fluidisation dudit lit (3, 30) de particules.

15. Installation (100) de production de vapeur ou de chaleur pour des utilisations industrielles, comprenant un ou plusieurs dispositifs (1) selon l'une quelconque des revendications précédentes.

16. Installation (100) selon la revendication précédente, qui est une installation de production d'énergie électrique.

17. Procédé de production de vapeur ou de chaleur pour des utilisations industrielles à partir de rayonnement solaire concentré, prévoyant l'utilisation d'un lit (3, 30) de particules fluidisables capables de stocker de l'énergie thermique d'origine solaire et pouvant être déplacées de façon sélective par un gaz de fluidisation, lequel procédé est **caractérisé en ce qu'**il comprend :
- une première étape de stockage de l'énergie thermique reçue du rayonnement solaire concentré, par déplacement d'une première partie (30) dudit lit de particules; et
- une deuxième étape de restitution de l'énergie thermique stockée au cours de ladite première étape, aux éléments échangeurs de chaleur (4) parcourus par un fluide de travail,
- **caractérisé en ce que** lesdites étapes de stockage et de restitution de chaleur peuvent être activées indépendamment l'une de l'autre.

18. Procédé selon la revendication précédente, selon lequel ladite activation indépendante des étapes de stockage et de restitution est obtenue par une séparation thermique des circuits du fluide de travail et du gaz de fluidisation.

19. Procédé selon la revendication 17 ou 18, prévoyant une étape d'échange de chaleur gaz/gaz, de préférence air/air, entre un premier gaz froid, qui est le gaz de fluidisation devant être utilisé pour la fluidisation de parties dudit lit (3, 30) de particules, et un deuxième gaz chaud qui est le gaz de fluidisation évacué desdites parties dudit lit (3, 30) de particules.

20. Procédé selon l'une quelconque des revendications 17 à 19, selon lequel ledit gaz de fluidisation est l'air.

21. Procédé selon l'une quelconque des revendications 17 à 20, selon lequel il est prévu une modification sélective de la vitesse du gaz de fluidisation.

22. Procédé selon l'une quelconque des revendications 17 à 21, qui est un procédé de production d'énergie électrique.

23. Procédé selon l'une quelconque des revendications 17 à 22, prévoyant une combustion d'un combustible fossile gazeux dans ledit lit (3, 30) de particules ou dans des parties de celui-ci.
